# EUROPEAN PATENT SPECIFICATION

(11) **EP 0 605 719 B1**
(45) Date of publication and mention of the grant of the patent: **21.04.1999**
(21) Application number: 92917398.7
(22) Date of filing: 01.06.1992
(51) Int. Cl.: B01D 53/88, B01D 53/92

(54) **METHOD FOR TREATING EXHAUST GAS**
VERFAHREN ZUM BEHANDELN VON ABGAS
PROCEDE DE TRAITEMENT DES GAZ D'ECHAPPEMENT

(43) Date of publication of application: 13.07.1994
(73) Proprietor: Kawasaki Jukogyo Kabushiki Kaisha, Kobe-shi Hyogo 650-91 (JP); YOSHIDA, Kunio, Tokyo 168 (JP); TSUTSUMI, Atsushi, Tokyo 178 (JP)
(72) Inventor: YOSHIDA, Kunio, Tokyo 168 (JP); TSUTSUMI, Atsushi, Tokyo 178 (JP); SAKAKIDA, Yasufumi, Akashi-shi, Hyogo 673 (JP); TSUTSUMI, Kazuo, 4-4-12, Kawajyu, Kobe-shi, Hyogo 655 (JP); TAKADA, Tomoaki, Kobe-shi, Hyogo 657 (JP)
(74) Representative: Klunker, Hans-Friedrich, Dr.
(86) International application number: JP9200709
(87) International publication number: WO9324207

(56) References cited:
- JP-A-61 238 328
- JP-Y-63 018 425

## Description

The present invention relates to a method for treating exhaust gases, such as the gases exhausted from a diesel engine, according to the pre-characterizing part of claim 1.

Denitrifying and soot-removing apparatuses for removing nitrogen oxides (NOx), soot and dust from within exhaust gases such as those from diesel engines are well known. These denitrifying and soot-removing apparatuses are designed to pass the exhaust gases through charged catalytic bed in order to remove the NOx by catalytic reactions. Known examples of such denitrifying apparatuses are stationary catalytic bed reactors and gravity-fed catalytic fluidized bed reactors (such as that disclosed in Japanese Patent Application Laid-Open No. 52-131, 970).

However, a stationary catalytic bed reactor has a problem in that the reaction chamber becomes clogged with the soot and dust contained in the exhaust gases, which drastically impedes the processing efficiency thereof, and it is impossible to change the catalyst during operation when it becomes deteriorated.

A device having the features of the pre-characterizing part of claim 1 is known from JP, Y2, 63-18425. The catalyst is charged fully in the space between the perforated cylinder and the cylindrical filter. Exhaust gas is fed into the external casing and is then passed through the catalyst radially inwards to be discharged to the outside through the cylindrical filter. The catalyst is simply rotated while cleaning the exhaust gas.

A gravity-fed catalytic fluidized bed reactor has a problem in that it is inconvenient because it cannot respond to variations in exhaust gas quantity caused by variations in engine load and in that, in order to obtain a gas speed high enough to fluidize the catalyst, a distribution plate thereof must be made to have a large area, so that the size of the apparatus itself increases.

Therefore, the object of the present invention is to provide a method for treating exhaust gases which can achieve a high fluidizing gas speed, increase the amount of exhaust gas that is processed, wherein the device used for carrying out the method can have smaller overall dimensions.

To achieve the above objective, the method for treating exhaust gases in accordance with the present invention comprises the features of claim 1.

### BRIEF DESCRIPTION OF THE DRAWINGS

FIG. 1 is a cross sectional view, taken in the axial direction, of one embodiment of an apparatus or processing exhaust gases in accordance with the present invention;
FIG. 2 is a cross sectional view taken along the line II-II in FIG. 1;
FIG. 3 is a perspective view showing the relationship between a diesel engine and the apparatus for processing exhaust gases;
FIG. 4 is a cross sectional view of a modification of the embodiment of FIG. 1, taken in the axial direction;
FIG. 5 is a cross sectional view of another embodiment of the present invention, taken in the axial direction;
FIG. 6 is a cross sectional view of a further embodiment of the present invention, taken in the axial direction;
FIG. 7 is a cross sectional view taken along the line VII-VII in FIG. 6;
FIG. 8 is a cross sectional view of yet another embodiment of the present invention, taken in the axial direction;
FIG. 9 is a cross sectional view of a modification of the embodiment of FIG. 8, taken in the axial direction; and
FIG. 10 is a cross sectional view of another modification of the embodiment of FIG. 8, taken in the axial direction.

### BEST MODE FOR CARRYING OUT THE INVENTION

Embodiments of the present invention will now be described in detail with reference to the accompanying drawings.

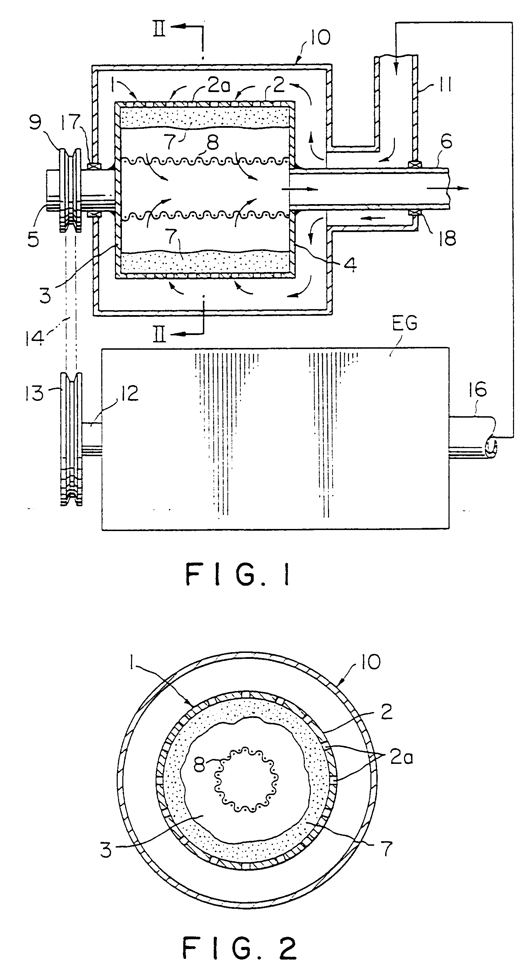

The description will first deal with an embodiment shown in FIG. 1 and FIG. 2 where reference number 1 denotes a catalytic fluidized bed reactor. This reactor 1 has a multiply perforated circular cylinder 2. The surface of this cylinder acts as a distribution plate or distributer, and end plates 3 and 4 are attached to both sides of the cylinder in the axial direction. The outer surface at a central portion of one of these end plates 3 is fixed to a drive shaft 5, and a central portion of the other of the end plates 4 is fixed to one end of an exhaust pipe 6 having an axis that is the same as that of the drive shaft 5. A particulate catalyst 7 is contained in the reactor 1. A filter 8 of a circular cylindrical structure and having the same axis as the drive shaft 5 and the exhaust pipe 6 is fixed to the interior of the reactor 1. The filter 8 is provided to control the disposal of powdered catalyst 7 and dust.

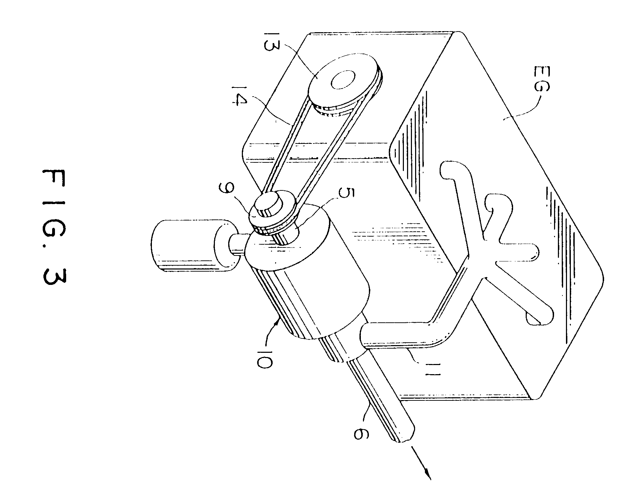

As shown also in FIG. 3, the configuration is such that a pulley 9 is fixed to the drive shaft 5 and a rotational drive corresponding to the rotational speed of a diesel engine EG is transferred to the drive shaft 5 by a drive mechanism comprising, for example, a pulley 13 attached to a rotational shaft 12 of the engine EG and a drive belt 14.

An external casing 10 is provided surrounding the reactor 1. The external casing 10 has a diameter greater than that of the reactor 1 and it is provided in such a manner that the entire reactor 1 and parts of the drive shaft 5 and the exhaust pipe 6 are covered thereby. An exhaust gas introduction pipe 11 that is directly connected to an exhaust pipe 16 of the engine EG is provided on one side of the external casing 10. As shown in FIG. 1, the drive shaft 5 and the exhaust pipe 6 are supported so as to be free to rotate within the external casing 10 by bearings 17 and 18, respectively, of a sealed structure. The reactor 1 and the external casing 10 are configured such that they can be disassembled to allow maintenance such as the exchange and/or cleaning of the catalyst 7 and filter 8.

The operation of the above embodiment will now be described. When the engine EG is started, the rotational drive thereof is transmitted through the drive transfer mechanism to drive the drive shaft 5. This rotates the catalytic fluidized bed reactor 1 together with the exhaust pipe 6 that is linked to the drive shaft 5, and the granular catalyst 7 contained within the reactor 1 is made to flow by centrifugal force so that it adheres to the inner surface of the distributer (the circular cylinder 2). At the same time that the engine EG starts, the exhaust gases therefrom are introduced through the exhaust gas introduction pipe 11 into the external casing 10 for the exhaust gas. These exhaust gases enter into the interior of the reactor 1 through perforations 2a in the distributer 2, propelled by the gas pressure of the engine EG, and the exhaust gases are brought into contact with the catalyst 7 while fluidizing the catalyst, to engender a reaction such as a denitrification reaction.

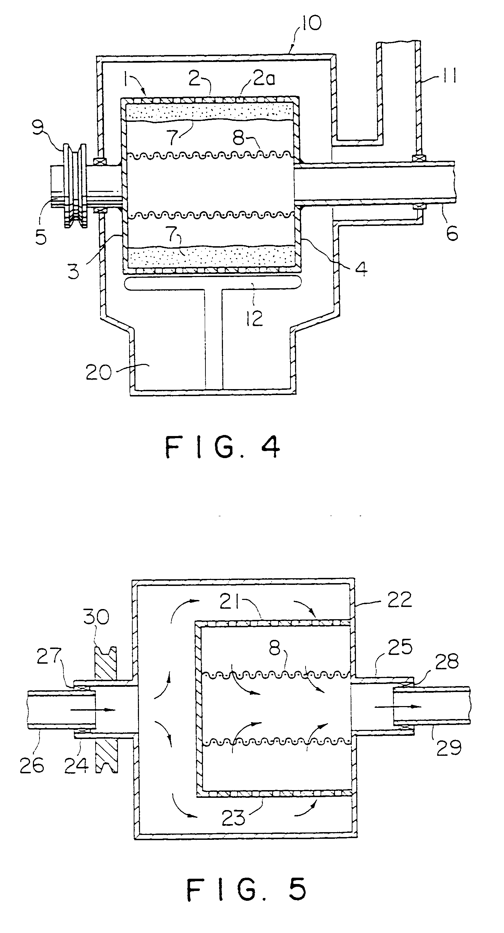

The exhaust gases that have been cleaned by the denitrification reaction pass through the filter 8 and are released to the outside by the exhaust pipe 6. If the perforations 2a of the distributer 2 are of a diameter small enough that dust (such as unburnt carbon) is not trapped therein, a scraper 12 that is provided in frictional contact with the outer surface of the distributer 2, as shown in FIG. 4, is used to scrape off dust that adheres or attempts to adhere to the outer surface of the distributer 2, and the scraped-off dust collects in a dust reclamation portion 20 provided in a lower portion of the external casing 10. Alternatively, if the perforations 2a in the distributer 2 are formed to be of a comparatively large diameter so as to allow the passage of dust, dust will accumulate in the reactor 1. In such a case, the accumulated dust will react with and denitrify the exhaust gas.

Another embodiment of the present invention will now be described with reference to FIG. 5. In this embodiment, a catalytic fluidized bed reactor 21 and an external casing 22 are connected in such a manner that the external casing 22 itself is made to rotate together with the reactor 21. Accordingly, as shown in the figure, one side of a distributer 23 that forms an outer circular cylindrical portion of the catalytic fluidized bed reactor 21 is fixed to one wall surface of the external casing 22. Axial pipes 24 and 25 are formed at the centers of the two sides of the external casing 22, each outwardly directed, with one axial pipe 24 supported rotatably by a sealed axial bearing 27 on an exhaust gas introduction pipe 26 that is linked to the exhaust pipe of the engine. The other axial pipe 25 is supported rotatably by a sealed axial bearing 28 on an exhaust pipe 29. A pulley 30 for rotational drive is fixed to the axial pipe 24. Note that the operation of this embodiment performs a denitrification or dust removal, in the same manner as the embodiment shown in FIG. 1. Therefore, a detailed description thereof is omitted.

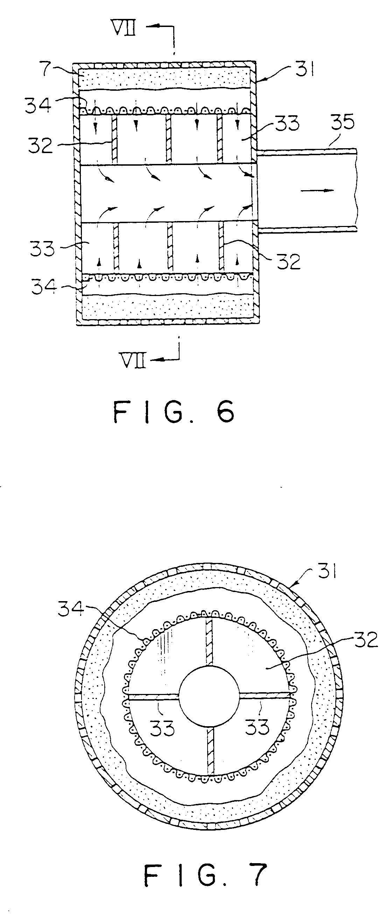

In the embodiment of the present invention shown in FIG. 6 and FIG. 7, flow adjustment plates 32 are provided within a circular cylindrical filter 34 in the interior of a catalytic fluidized bed reactor 31, with these flow adjustment plates 32 being designed to reduce pressure losses in the apparatus. The flow adjustment plates 32 have an annular shape and are fixed at an optimal spacing in the direction of the rotational axis of the apparatus. The flow adjustment plates 32 are linked together by radial linkage plates 33. Reference number 35 denotes an exhaust pipe.

By selecting a suitable catalyst, the above described apparatus for processing exhaust gases can of course be used to provide dust removal, and it can also provide cracking chemical reactions such as denitrification, desulfurization, and de-salting, so it has a wide range of application.

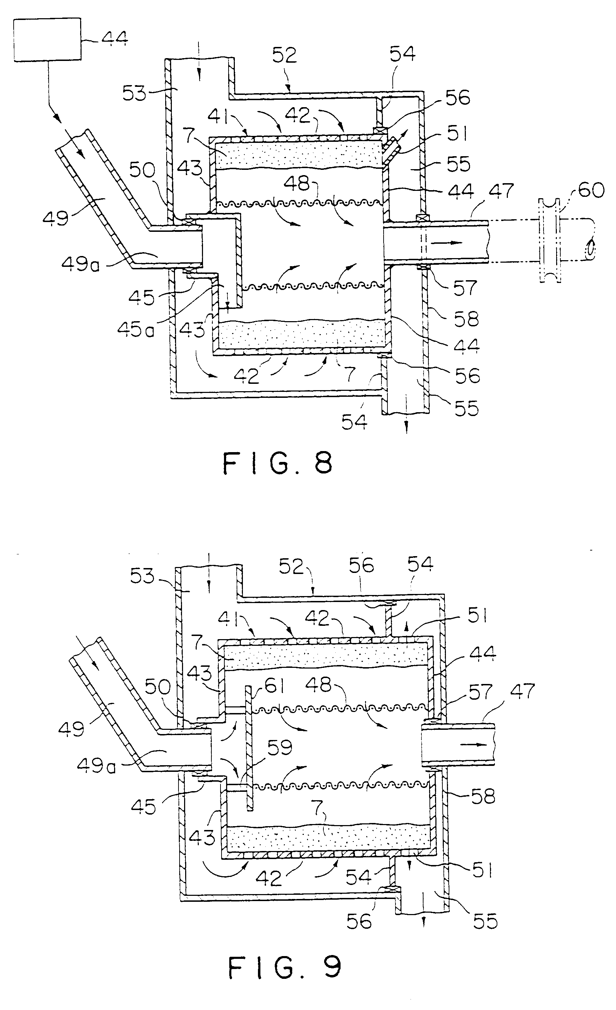

Another embodiment of the apparatus for processing exhaust gases in accordance with the present invention, which is provided with means for automatically supplying new catalyst and automatically removing deteriorated catalyst, is shown in FIG. 8.

This embodiment has a distributer 42 with a circular cylindrical surface, in the same way as previous embodiments, and is configured of a catalytic fluidized bed reactor 41 with end plates 43 and 44 fixed to each side thereof. An axial pipe 45 is fixed to a central portion of one end plate 43 and a supply passage 45a for the catalyst 7 is formed integrally on the inner side of the axial pipe 45, perpendicular to the axis of the axial pipe. One end of an exhaust pipe 47 whose axis matches that central axis of the axial pipe 45 is fixed to a central portion of the other end plate 44. A circular cylindrical filter 48 is fixed to the inner side of the distributer 42, on the same axis as the axial pipe 45 and the exhaust pipe 47.

A hopper 44 for the catalyst 7 is provided in such a manner that a catalyst supply pipe 49 communicates therewith, and a catalyst reservoir 49a is formed integrally in a horizontal orientation at a lower portion of the catalyst supply pipe 49. The above described axial pipe 45 is rotatably supported by a sealed bearing 50 on the catalyst reservoir 49a. A discharge pipe 51 for the catalyst 7 is provided on one side of the end plate 44 remote from the supply passage 45a for the catalyst 7. The discharge pipe 51 opens into the fluidized bed of the catalyst 7.

An external casing 52 has a diameter greater than that of the reactor 41 and arranged in such a manner that the entire reactor 41 and parts of the exhaust pipe 47 and the catalyst reservoir 49a are covered thereby. An exhaust gas introduction pipe 53 that is directly linked to an exhaust pipe (not shown in the figure) of the engine is provided on one side of the external casing 52.

A catalyst discharge passage 55 is formed in the portion of the external casing 52 on the end plate 44 side, isolated from the exhaust gas introduction side by an isolation plate 54, and the discharge pipe 51 for the catalyst 7 communicates with this catalyst discharge passage 55. One end portion of the reactor 41 and a base portion of the exhaust pipe 47 are rotatably supported by bearings 56 and 57, respectively, in the isolation plate 54 and an outer plate 58 that forms part of the catalyst discharge passage 55. Thus the catalytic fluidized bed reactor 41 is rotatably supported at three points with respect to the external casing 52.

A pulley 60 is provided on the exhaust pipe 47 as means of rotatably driving the reactor 41. This pulley 60 is connected to a drive transfer mechanism and a reduction mechanism, and thus a rotation corresponding to the speed of the engine is imparted to the reactor 41.

The operation of the above embodiment will now be described. When the engine is started, the rotational drive thereof is transmitted through the reduction mechanism and the drive transfer mechanism to drive the exhaust pipe 47 and also rotate the catalytic fluidized bed reactor 41. The granular catalyst 7 contained within this reactor 41 is made to flow by centrifugal force so that it adheres to the inner surface of the distributer 42 and, at the same time that the engine starts, the exhaust gases therefrom are introduced through the exhaust gas introduction pipe 53 into the external casing 52. These exhaust gases enter into the interior of the reactor 41 through perforations in the distributer 42, propelled by the gas pressure of the engine, and the exhaust gases are brought into contact with the catalyst 7 while fluidizing the catalyst, to engender a reaction such as a denitrification reaction.

The exhaust gases that have been cleaned by the denitrification reaction pass through the filter 48 and are released to the outside by the exhaust pipe 47. If the perforations of the distributer 42 are of a diameter small enough that dust (such as unburnt carbon) is not trapped therein, dust that adheres or attempts to adhere to the outer surface of the distributer 42 can be scraped off by a scraper and collected in a dust reclamation portion provided in a lower portion of the external casing 52, in a similar manner to that shown in FIG. 4. Alternatively, if the perforations in the distributer 42 are formed to be of a comparatively large diameter so as to allow the passage of dust, dust will accumulate in the fluidized layer and this accumulated dust can react with and denitrify the exhaust gas.

The catalyst 7 in the catalyst reservoir 49a of the catalyst supply pipe 49 is supplied by centrifugal force into the fluidized bed through the supply passage 45a of the axial pipe 45. Catalyst 7 that has been degraded and powdered by the reaction flies out from the discharge pipe 51 and is reclaimed through the catalyst discharge passage 55.

In a modified embodiment shown in FIG. 9, a circular plate 61 of a diameter larger than that of the aperture of the axial pipe 45 is arranged on stays 59 facing the end plate 43, in place of the catalyst supply passage 45a of FIG. 8. This construction ensures that the catalyst 7 flowing into the reactor 41 by the action of centrifugal force is supplied uniformly in the circumferential direction. Note that structural components identical to those of the embodiment of FIG. 8 are given the same reference numbers and a detailed description of their structure is omitted. Note also that, since the operation of the components of this embodiment that are the same as those in FIG. 8 are similarly identical thereto, description of their operation is also omitted.

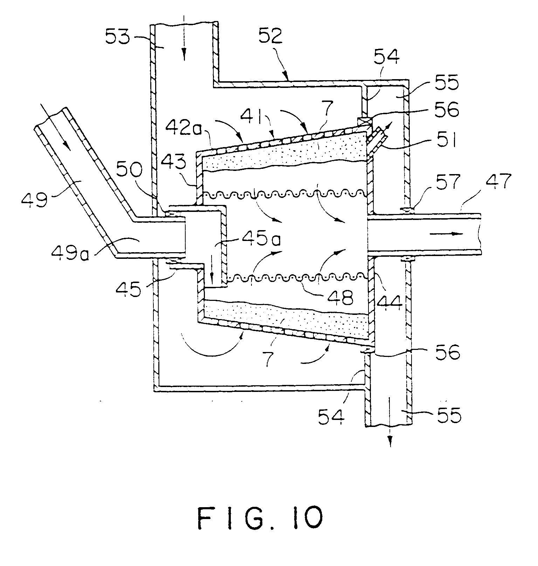

A further modified embodiment shown in FIG. 10 is similar to that of FIG. 8, except that it is provided with a distributer 42a that has a tapered circular cylindrical shape. This ensures that the degraded, powdered catalyst 7 is discharged efficiently from the discharge pipe 51 by centrifugal force. Note that structural components identical to those of FIG. 8 are given the same reference numbers and a detailed description of their structure is omitted. Note also that the operation of components other than the distributer 42a are similar to those of the embodiment of FIG. 8 and hence description of their operation is also omitted.

The effects obtained by the above described embodiments are described below.
(a) By allowing the catalytic fluidized bed reactor to rotate within an exhaust gas atmosphere, the catalytic fluidized bed can be made into a centrifugal fluidized bed. Therefore, forces always act in the radially outward direction in the fluidized bed, and it is thus difficult for the fluidized catalyst to be entrained in the radially inward direction by the flow of exhaust gases. Consequently, large fluidized gas speeds can be achieved in comparison with a conventional gravity-fed fluidized bed, therefore greater amounts of exhaust gases can be processed, and thus the entire apparatus can be designed to be small enough to be mounted on an automobile so that pollution problems caused by exhaust gases can be solved in a sensible manner.
(b) Since the engine's rotational force is used as the drive source for the catalytic fluidized bed reactor, a quantity of exhaust gas corresponding to the rotational speed of the engine can be processed efficiently.
(c) The supply of new catalyst and the removal of degraded, powdered catalyst can be done automatically, so the reactor for exhaust gases provides extremely efficient denitrification.

As the catalyst contained within a catalytic fluidized bed reactor for processing a diesel engine's exhaust gases, a monocrystalline zeolite or a metal ion exchanger thereof, such as a copper ion exchange zeolite (ZSM-5), could be used. A copper ion exchange zeolite is effective in the reduction of NOx in the exhaust gases from diesel engines. A centrifugal fluidized bed of copper ion exchange zeolite is effective in the removal of powder and soot simultaneously with the reduction of NOx.

The zeolite (ZSM-5) could be synthesized by a hot water reaction. After filtration, particles of the ZSM-5 type of zeolite are suspended in water, copper (II) acetate is added thereto, and ion exchange processing takes place over 24 hours at room temperature. Next the zeolite particles are washed in distilled water, then dried at 383 K for 12 hours. The composition of this zeolite is listed in Table 1. A colloid of silica (20% by weight) is used as a binder for the catalyst, which is a copper ion exchange zeolite ZSM-5 obtained by spray-granulation, and this is sintered at 773K for four hours. The physical characteristics of the catalyst obtained in this manner are listed in Table 2.

**Table 1**

| Composition of Zeolite Cu ZSM-5 | | | | | |
|---|---|---|---|---|---|
| SiO₂ [wt%] | Al₂O₃ [wt%] | Na₂O [wt%] | CuO [wt%] | Firing Loss [wt%] | Exchange Level [%] |
| 84.7 | 4.9 | 1.3 | 3.2 | 3.2 | 65.8 |

**Table 2**

| Physical Characteristics of Catalyst | | |
|---|---|---|
| Average Particle Size [µm] | Density [kgm⁻³] | Void Ration [-] |
| 26 | 1900 | 0.56 |

The catalyst could also be spherical particles obtained by spray-granulation of compounds containing silica sols and fine catalytic particles selected from a group consisting of metal carrying zeolites, metal silicates, and perovskite types of oxides.

### INDUSTRIAL APPLICABILITY

The present invention is particularly applicable to the processing of exhaust gases from a diesel engine, but it can also be applied to the processing of various types of exhaust gas, depending on the choice of catalyst.

## Claims

1. Method for treating exhaust gases using a device, comprising:
an external casing (10, 22, 52) having an introduction pipe (11, 53) for a gas being processed;
a circular cylindrical catalytic bed reactor (1, 21, 31, 41) provided in an internal portion of said external casing (10, 52), said reactor comprising at its periphery a distributer formed of a multiply perforated cylinder (2, 42) for the introduction of said gases being processed, said perforated cylinder (2, 42) being rotatably driven about a central axis thereof and having in the interior thereof a particulate catalyst (7);
a cylindrical filter (8, 34, 48) provided within said reactor (1, 21, 31, 41) about said central axis thereof, and
an exhaust pipe (6, 25, 35, 47) for said gases being processed, connected to the interior of said cylindrical filter (8, 34, 48) coaxially along said central axis and protruding from said external casing (10, 52),
characterized in that said bed reactor (1,21,31,41) is used as a fluidized bed reactor by rotating said cylinder (2,42) such that said particulate catalyst (7) loosely filled within the space defined between said multiply perforated cylinder (2, 42) and said filter (8, 34, 48) is made to flow by centrifugal force so that it adheres to the inner surface of the cylinder and that the exhaust gases are introduced into the interior of the bed reactor (1,21,31,41) through the perforations (2a) of the cylinder (2,42).

2. A method according to claim 1, wherein said reactor (1, 21) has on one side thereof said exhaust pipe (6, 25) and on the other side thereof a rotational drive shaft (5, 24) coaxial with said exhaust pipe (6, 25), with said drive shaft (5, 24) protruding from said external casing (10).

3. A method according to claim 2, wherein said drive shaft (5) is connected to an engine (EG) for being driven by said engine, and a gas outlet pipe (16) of said engine (EG) is connected to said introduction pipe (11).

4. A method according to any of claims 1 to 3, wherein said exhaust pipe (6) is supported to be free to rotate in a sealed bearing (18) in said external casing (10).

5. A method according to any of claims 1 to 4, wherein a scraper (12) is provided within said external casing (10), in frictional contact with an outer peripheral surface of said distributer (2) of said reactor (1).

6. A method according to any of claims 1 to 5, wherein said external casing (22) is fixed to said reactor (21) and is arranged to be free to rotate with said reactor (21).

7. A method according to claim 6, wherein said introduction pipe (26) of said external casing (22) is arranged coaxially with said exhaust pipe (25) and said introduction pipe (26) functions as a rotational drive input shaft.

8. A method according to any of claims 1 to 7, wherein annular flow adjustment plates (32) are fixed in the interior of said circular cylindrical filter (34), spaced along the direction of the central axial thereof.

9. A method according to any of claims 1 to 8, wherein a catalyst supply pipe (49, 45) for supplying catalyst (7) is provided so as to protrude through said external casing (52) into said reactor (41).

10. A method according to claim 9, wherein an inner end of said catalyst supply pipe (49, 45) has a catalyst reservoir (49a).

11. A method according to any of claims 1 to 10, wherein a catalyst discharge passage (51) is provided in said external casing (52) and catalyst discharge means (58) communicating with said catalyst discharge passage (51) is provided at a position radially outward from said reactor (41).

12. A method according to any of claims 1 to 11, wherein said distributer (42) of said reactor (41) is configured of a tapered circular cylinder.

13. A method according to any of claims 1 to 12, wherein said catalyst (7) is a zeolite.

## Patentansprüche

1. Verfahren zum Behandeln von Abgasen unter Verwendung einer Vorrichtung mit:
einem äußeren Gehäuse (10, 22, 52), das ein Einführrohr (11, 53) für ein zu behandelndes Gas aufweist;
einem kreiszylindrischen Katalysatorbett-Reaktor (1, 21, 31, 41), der in einem inneren Bereich des äußeren Gehäuses (10, 52) vorgesehen ist, wobei der Reaktor an seinem Umfang einen Verteiler aufweist, der aus einem mehrfach perforierten Zylinder (2, 42) zum Einleiten der zu behandelnden Gase gebildet ist, wobei der perforierte Zylinder (2, 42) um eine zentrale Achse desselben rotationsmäßig antreibbar ist und in seinem Inneren einen teilchenförmigen Katalysator (7) aufweist;
einem zylindrischen Filter (8, 34, 48), das innerhalb des Reaktors (1, 21, 31, 41) um dessen zentrale Achse herum vorgesehen ist, und mit
einem Austrittsrohr (6, 25, 35, 47) für die behandelten Gase, das mit dem Inneren des zylindrischen Filters (8, 34, 48) koaxial längs der zentralen Achse verbunden ist und aus dem äußeren Gehäuse (10, 52) herausragt,
dadurch gekennzeichnet,
daß der Bett-Reaktor (1, 21, 31, 41) als Fluidbett-Reaktor verwendet wird, indem der Zylinder (2, 42) derart rotationsmäßig bewegt wird, daß der teilchenförmige Katalysator (7), der in den zwischen dem mehrfach perforierten Zylinder (2, 42) und dem Filter (8, 34, 48) gebildeten Raum lose eingefüllt ist, durch Zentrifugalkraft zum Fließen gebracht wird, so daß er an der Innenfläche des Zylinders anhaftet, und daß die Abgase durch die Perforationen (2a) des Zylinders (2, 42) in das Innere des Bett-Reaktors (1, 21, 31, 41) eingebracht werden.

2. Verfahren nach Anspruch 1,
wobei der Reaktor (1, 21) auf seiner einen Seite das Austrittsrohr (6, 25) aufweist und auf seiner anderen Seite eine Drehantriebswelle (5, 24) aufweist, die koaxial mit dem Austrittsrohr (6, 25) ist, wobei die Antriebswelle (5, 24) aus dem äußeren Gehäuse (10) herausragt.

3. Verfahren nach Anspruch 2,
wobei die Antriebswelle (5) mit einem Motor (EG) verbunden ist, um von dem Motor angetrieben zu werden, und wobei ein Gasaustrittsrohr (16) des Motors (EG) mit dem Einführrohr (11) verbunden ist.

4. Verfahren nach einem der Ansprüche 1 bis 3,
wobei das Austrittsrohr (6) in einem abgedichteten Lager (18) in dem äußeren Gehäuse (10) frei drehbar gelagert ist.

5. Verfahren nach einem der Ansprüche 1 bis 4,
wobei eine Abstreifeinrichtung (12) in dem äußeren Gehäuse (10) in Reibungskontakt mit einer Außenumfangsfläche des Verteilers (2) des Reaktors (1) vorgesehen ist.

6. Verfahren nach einem der Ansprüche 1 bis 5,
wobei das äußere Gehäuse (22) an dem Reaktor (21) befestigt ist und zusammen mit dem Reaktor (21) frei drehbar ist.

7. Verfahren nach Anspruch 6,
wobei das Einführrohr (26) des äußeren Gehäuses (22) koaxial mit dem Austrittsrohr (25) angeordnet ist und das Einführrohr (26) als Drehantriebs-Eingangswelle wirkt.

8. Verfahren nach einem der Ansprüche 1 bis 7,
wobei ringförmige Strömungseinstellplatten (32) im Inneren des kreiszylindrischen Filters (34) angebracht sind und entlang der Richtung der zentralen Achse desselben voneinander beabstandet sind.

9. Verfahren nach einem der Ansprüche 1 bis 8,
wobei ein Katalysator-Zuführrohr (49, 45) zum Zuführen von Katalysator (7) derart vorgesehen ist, daß es durch das äußere Gehäuse (52) hindurch in den Reaktor (41) ragt.

10. Verfahren nach Anspruch 9,
wobei ein inneres Ende des Katalysator-Zuführrohrs (49, 45) ein Katalysator-Reservoir (49a) aufweist.

11. Verfahren nach einem der Ansprüche 1 bis 10,
wobei eine Katalysator-Abführpassage (51) in dem äußeren Gehäuse (52) vorgesehen ist und eine mit der Katalysator-Abführpassage (51) kommunizierende Katalysator-Abführeinrichtung (58) an einer Stelle radial außerhalb von dem Reaktor (41) vorgesehen ist.

12. Verfahren nach einem der Ansprüche 1 bis 11,
wobei der Verteiler (42) des Reaktors (41) nach Art eines sich verjüngenden Kreiszylinders konfiguriert ist.

13. Verfahren nach einem der Ansprüche 1 bis 12,
wobei der Katalysator (7) ein Zeolith ist.

## Revendications

1. Procédé de traitement de gaz d'échappement utilisant un dispositif, comprenant :
un boîtier externe (10, 22, 52) présentant un tuyau d'introduction (11, 53) pour un gaz à traiter;
un réacteur à lit catalytique cylindrique circulaire (1, 21, 31, 41) prévu dans une partie interne dudit boîtier externe (10, 52), ledit réacteur comprenant, à sa périphérie, un distributeur constitué d'un cylindre perforé de manière multiple (2, 42) pour l'introduction desdits gaz à traiter, ledit cylindre perforé (2, 42) étant entraîné en rotation autour de son axe central et comprenant, à l'intérieur, un catalyseur particulaire (7);
un filtre cylindrique (8, 34, 48) prévu à l'intérieur dudit réacteur (1, 21, 31, 41) autour de son dit axe central, et
un tuyau d'échappement (6, 25, 35, 47) pour lesdits gaz à traiter, relié à l'intérieur dudit filtre cylindrique (8, 34, 48) de manière coaxiale le long dudit axe central et faisant saillie dudit boîtier externe (10, 52),
caractérisé en ce que ledit réacteur à lit (1, 21, 31, 41) est utilisé en tant que réacteur à lit fluidisé en faisant tourner ledit cylindre (2, 42) de telle façon que ledit catalyseur particulaire (7) remplissant de manière lâche l'espace défini entre ledit cylindre perforé de manière multiple (2, 42) et ledit filtre (8, 34, 48) soit amené à s'écouler par la force centrifuge de façon telle qu'il adhère à la surface interne du cylindre et que les gaz d'échappement soient introduits à l'intérieur du réacteur à lit (1, 21, 31, 41) à travers les perforations (2a) du cylindre (2, 42).

2. Un procédé selon la revendication 1, dans lequel ledit réacteur (1, 21) présente, sur un côté de celui-ci, ledit tuyau d'échappement (6, 25) et, sur l'autre côté de celui-ci, un arbre d'entraînement en rotation (5, 24) coaxial audit tuyau d'échappement (6, 25), ledit arbre d'entraînement (5, 24) faisant saillie dudit boîtier externe (10).

3. Un procédé selon la revendication 2, dans lequel ledit arbre d'entraînement (5) est relié à un moteur (EG) pour être entraîné par ledit moteur, et où un tuyau de sortie des gaz (16) dudit moteur (EG) est relié audit tuyau d'introduction (11).

4. Un procédé selon l'une quelconque des revendications 1 à 3, dans lequel ledit tuyau d'échappement (6) est porté pour être libre de tourner dans un palier scellé (18) prévu dans ledit boîtier externe (10).

5. Un procédé selon l'une quelconque des revendications 1 à 4, dans lequel une raclette (12) est prévue à l'intérieur dudit boîtier externe (10), en contact de friction avec une surface périphérique externe dudit distributeur (2) dudit réacteur (1).

6. Un procédé selon l'une quelconque des revendications 1 à 5, dans lequel ledit boîtier externe (22) est fixé audit réacteur (21) et est disposé pour être libre de tourner avec ledit réacteur (21).

7. Un procédé selon la revendication 6, dans lequel ledit tuyau d'introduction (26) dudit boîtier externe (22) est disposé de manière coaxiale audit tuyau d'échappement (25), et où ledit tuyau d'introduction (26) fonctionne en tant qu'arbre d'entrée d'entraînement en rotation.

8. Un procédé selon l'une quelconque des revendications 1 à 7, dans lequel des plaques de réglage d'écoulement annulaire (32) sont fixés à l'intérieur dudit filtre cylindrique circulaire (34), en étant espacés dans la direction de son axe central.

9. Un procédé selon l'une quelconque des revendications 1 à 8, dans lequel un tuyau d'amenée de catalyseur (49, 45) pour amener un catalyseur (7) est prévu de manière à faire saillie à travers ledit boîtier externe (52) dans ledit réacteur (41).

10. Un procédé selon la revendication 9, dans lequel une extrémité interne dudit tuyau d'amenée de catalyseur (49, 45) présente un réservoir de catalyseur (49a).

11. Un procédé selon l'une quelconque des revendications 1 à 10, dans lequel un passage de décharge de catalyseur (51) est prévu dans ledit boîtier externe (52), et où des moyens de décharge de catalyseur (58) communiquant avec ledit passage de décharge de catalyseur (51) sont prévus au niveau d'une position radialement vers l'extérieur dudit réacteur (41).

12. Un procédé selon l'une quelconque des revendications 1 à 11, dans lequel ledit distributeur (42) dudit réacteur (41) présente la forme d'un cylindre circulaire tronconique.

13. Un procédé selon l'une quelconque des revendications 1 à 12, dans lequel ledit catalyseur (7) est une zéolite.
